# EUROPÄISCHE PATENTSCHRIFT

(11) **EP 0 588 263 B1**
(45) Veröffentlichungstag und Bekanntmachung des Hinweises auf die Patenterteilung: **03.12.1997**
(21) Anmeldenummer: 93114596.5
(22) Anmeldetag: 10.09.1993
(51) Int. Cl.: B60R 22/46

(54) **Zugvorrichtung bei Kraftfahrzeugen zur schlagartigen Verschiebung von Elementen**
Pulling device in cars for the sudden shifting of elements
Appareil de traction sur des véhicules automobiles pour déplacer brusquement des éléments

(30) Priorität: 14.09.1992 DE 4230664
(43) Veröffentlichungstag der Anmeldung: 23.03.1994
(73) Patentinhaber: TAKATA (EUROPE) VEHICLE SAFETY TECHNOLOGY GmbH, D-89081 Ulm (DE)
(72) Erfinder: Kopetzky, Robert, D-73557 Mutlangen (DE); Rosien, Harald, D-86736 Dornstadt (DE); Notar, Walter, D-89264 Weissenhorn (DE); Häge, Günther, D-89129 Langenau (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 171 580
- EP-A- 0 324 907
- WO-A-90/11913
- DE-A- 3 518 121
- DE-A- 3 536 394
- DE-A- 3 731 697
- DE-A- 4 106 480

## Beschreibung

Die Erfindung betrifft eine Zugvorrichtung bei Kraftfahrzeugen zur schlagartigen Straffung von Sicherheitsgurten bei einem Unfall.

Üblicherweise dient die bei derartigen Zugvorrichtungen für die Gurtstraffung vorgesehene Antriebseinheit, welche eine mit einer pyrotechnischen Ladung arbeitende Energiequelle umfaßt, lediglich für die Straffung einer einzigen Sicherheitsgurtanordnung (WO 90/11913).

Weiter ist es bereits bekannt, die bei einem Unfall erfolgende Verschiebung bestimmter Fahrzeugaggregate z.B. des Motorblocks dazu auszunutzen, zwei Sicherheitsgurte zu straffen. Hierzu können entweder zwei Zugseile über einen Verteiler beaufschlagt werden (EP 0 324 907 A1), oder ein Zugseil treibt eine Gurtaufwickelrolle an, welche eine Seiltrommel aufweist, mittels der die Gurtaufwickelrolle einer weiteren Sicherheitsgurtanordnung angetrieben wird (EP 0 171 580 A1). Der Eingriff in den Gurtaufwickelmechanismus erfordert jedoch einen erhöhten technischen Aufwand, weil durch die zusätzliche Funktion der Gurtstraffung der normale Gurtabwickel- und -aufwickelvorgang nicht beeinträchtigt werden darf.

Bei einer weiteren bekannten Strammvorrichtung für Rücksitzgurte in Kraftfahrzeugen (DE-A-35 36 394), welche die Merkmale des Oberbegriffs des Anspruchs 1 zeigt, ist nach einer ersten Ausführungsform vorgesehen, daß die Kolbenstange einer aus Kolben und Zylinder bestehenden Antriebseinrichtung senkrecht zu zwei Einzelseilen angeordnet ist, die mit zwei Gurtschlössern in Verbindung stehen. Die Kolbenstange ist über ein Gleitstück mit den beiden Einzelseilen so verbunden, daß diese bei einer Betätigung der Antriebseinrichtung senkrecht zu ihrer Längserstreckung bewegt werden.

Bei einer weiteren Ausführungsform der bekannten Strammvorrichtung ist das eine Zugseil mit dem Kolben und das andere mit dem Zylinder einer Antriebseinrichtung verbunden.

Bei einer dritten Ausführungsform sind die Verankerungsteile zweier unmittelbar benachbarter Gurtschlösser durch einen gemeinsamen Umlenkblock geführt, so daß die Antriebseinrichtung unmittelbar am Ausgang des Umlenkblocks angreift. Um in Abhängigkeit von der Benutzungslage der den Schlössern zuzuordnenden Sicherheitsgurtsysteme die Schlösser auch getrennt strammen zu können, ist vorgesehen, an der Antriebseinrichtung zwei getrennte Treibsätze anzuordnen, welche über getrennte Stromkreise und Schalter scharfgeschaltet sind, so daß jedem Schloß ein eigener Treibssatz zugeordnet ist.

Nachteilig an dieser Ausführungsform ist, daß die beiden Gurtschlösser eng benachbart sein müssen und beide Verankerungsteile bis unmittelbar zur Antriebseinrichtung geführt werden müssen.

Das Ziel der vorliegenden Erfindung besteht darin, eine Zugvorrichtung der eingangs genannten Gattung zu schaffen, die zum einen kostengünstig ausgebildet ist und zum anderen einen geringen Platzbedarf aufweist.

Zur Lösung dieser Aufgabe sind die Merkmale des Patentanspruchs 1 vorgesehen.

Durch die Zuordnung zweier oder mehrerer zu steuernder Elemente zu einer einzigen Zugvorrichtung können die Antriebseinheit, die Energiequelle und der Beschleunigungssensor an einem Platz im Fahrzeug untergebracht werden, der für deren Aufnahme optimal geeignet ist und eine störungsfreie Unterbringung gewährleistet. Der Platz kann dabei völlig unabhängig davon sein, wo sich die zu steuernden Elemente befinden. So kann die Antriebseinheit beispielsweise unter der Rücksitzbank angebracht sein, von wo dann die einzelnen Zugorgane zu den jeweiligen Sicherheitsgurten oder sonstigen zu steuernden Elementen geführt werden. Dabei kann entweder ein Verteiler vorgesehen sein, über den alle Zugorgane gleichzeitig mit der Zugvorrichtung verbunden sind, es können aber auch mehrere Verteiler beispielsweise immer paarweise zwei Zugorgane miteinander verbinden, wobei diese Verteiler dann über einen Hauptverteiler miteinander verbunden und an der Zugvorrichtung angeschlossen sind.

Vorteilhafte praktische Ausführungen für die Anordnung des Verteilers und die Ausbildung der Zugorgane entnimmt man den Ansprüchen 2 bis 5.

Nach einer weiteren vorteilhaften Ausführungsform umfaßt die Antriebseinheit zumindest einen Zylinderraum und einen im Zylinderraum durch die Energiequelle verschiebbaren Kolben. Dadurch wird eine schmale Bauweise der Antriebseinheit ermöglicht, die sich günstig an bestimmten Positionen am Fahrzeugchassis unterbringen läßt. Weiterhin ist durch die Zylinder-Kolben-Anordnung eine robuste und einfache Ausführungsform der Antriebseinheit gegeben. Es ist jedoch prinzipiell beispielsweise auch ein Drehmechanismus denkbar, wobei das Zugorgan zur Bewegung der Gurtschlösser aufgerollt wird.

Nach einer weiteren bevorzugten Ausführungsform der Erfindung ist der Verteiler direkt am Kolben befestigt. Auf diese Weise kann der Verteiler beispielsweise in das Gehäuse der Antriebseinheit mit integriert werden, so daß eine weitere Reduzierung des Platzbedarfs erreicht wird.

Der Verteiler kann jedoch auch über ein weiteres Zugorgan mit dem Kolben verbunden sein. Haben die Zugorgane für zwei oder mehr zu beaufschlagende Sicherheitsgurtanordnungen über einen Teilbereich den gleichen Verlegungsweg im Fahrzeug, so braucht entlang dieses Weges nur ein einziges Zugorgan vorgesehen zu werden. Am Trennungspunkt der Verlegungswege ist dann ein Verteiler vorzusehen, von dem für die restlichen Verlegungswege jeweils getrennte Zugorgane zu den Gurtschlössern führen. Auf diese Weise kann für einen längeren Verlegungsweg ein Teil der Zugorgane eingespart werden.

Nach Anspruch 6 ist als Energiequelle eine pyrotechnische Ladung vorgesehen, die in Verbindung mit dem Zylinderraum steht. Die Verwendung einer pyrotechnischen Ladung als Energiequelle ist besonders vorteilhaft, da für die Steuerung von beispielsweise vier Sicherheitsgurten, im Vergleich zur Steuerung eines einzigen Sicherheitsgurtes, der vierfache Druck zur Verfügung stehen muß, um an allen Sicherheitsgurten die gleiche Straffkraft zu erreichen. Mit einer pyrotechnisehen Ladung ist dies sehr einfach zu verwirklichen, da z. B. nur die Pulvermenge erhöht oder ein anderes Zündmittel verwendet werden muß. Prinzipiell sind jedoch auch andere Energiequellen in Verbindung mit einer erfindungsgemäßen Zugvorrichtung einsetzbar. Beispielsweise kann der Kolben der Antriebseinheit durch ein vorgespanntes Federelement bei einem Unfall in Bewegung gesetzt werden.

Durch die Bewegung des Gurtschlosses in Richtung zum Fahrzeugchassis werden gleichzeitig, bei einer Dreipunktgurtanordnung, beide am Körper des Fahrzeuginsassen anliegende Gurtteile gestrafft, ohne daß das Gurtband in einer Umlenkeinheit verschoben werden muß.

Bei einer weiteren Ausführungsform nach Anspruch 7 ist an den Gurtschlössern zumindest eine Umlenkvorrichtung für das Zugorgan angeordnet, durch welche das dem Verbindungselement zugewandte Endstück des Zugorgans bevorzugt um etwa 180° umgelenkt wird, wobei das umgelenkte Endstück des Zugorgans mit dem Chassis in Verbindung steht.

Durch die Anwendung des Flaschenzugprinzips können die Kräfte, denen die Zugorgane bei der Aktivierung der Energiequelle ausgesetzt sind, reduziert werden. Beispielsweise wird die Kraft, die auf ein Zugorgan wirkt, bei Verwendung einer Umlenkrolle halbiert. Durch diese Kraftverminderung können die Zugorgane für geringere Kräfte ausgelegt und damit dünner ausgebildet werden, so daß eine höhere Flexibilität der Zugorgane erreicht werden kann. Diese höhere Flexibilität ist von besonderem Vorteil, da die Zugorgane dadurch besser, insbesondere auch mit stärkeren Krümmungen im Fahrzeug verlegt werden können. Gerade bei der Verwendung einer weit von den Sicherheitsgurten angeordneten Antriebseinheit kann dadurch das Verlegen der Zugorgane deutlich erleichtert werden.

Nach Anspruch 7 ist zweckmäßigerweise vorgesehen, daß an den Gurtschlössern als Umlenkvorrichtung eine Umlenkrolle drehbar gelagert ist, an der das Zugorgan im wesentlichen in einem Winkel von 180° anliegt.

Nach Anspruch 9 ist das Zugorgan genau einmal um die Umlenkvorrichtung geführt und mit seinem freien Ende am Chassis befestigt. Dadurch ist eine sehr einfache Ausbildung der Umlenkvorrichtung gegeben, die dem beengten Platzbedarf Rechnung trägt. Ist jedoch eine höhere Kraftuntersetzung nötig, so kann auch am Chassis zumindest eine weitere Umlenkvorrichtung vorgesehen sein. Das Zugorgan kann mehrmals um die beiden Umlenkvorrichtungen oder um weitere an den Gurtschlössern oder am Chassis vorgesehene Umlenkvorrichtungen geführt sein, bis eine ausreichende Kraftuntersetzung erreicht ist.

Die durch die Kraftuntersetzung entstehende Verlängerung des Kolbenhubes der Antriebseinheit ist gerade bei Verwendung einer pyrotechnischen Ladung als Energiequelle unproblematisch. Der bei der Aktivierung der pyrotechnischen Ladung entstehende Impuls ist in der Regel so groß, daß auch dieser längere Verschiebeweg des Kolbens in ausreichend kurzer Zeit durchlaufen wird.

Die Erfindung wird nachfolgend anhand eines Ausführungsbeispiels unter Bezugnahme auf die Zeichnung erläutert; in dieser zeigt:
- Fig. 1: eine teilweise geschnittene Seitenansicht einer erfindungsgemäß ausgebildeten Zugvorrichtung, die mit zwei Gurtschlössern einer Sicherheitsgurtanordnung verbunden ist,
- Fig. 2: einen Ausschnitt einer teilweise geschnittenen Seitenansicht einer weiteren Ausführungsform und
- Fig. 3: eine Ansicht analog Fig. 1 einer weiteren Ausführungsform, bei der die Zugorgane über an den Gurtschlössern vorgesehene Umlenkvorrichtungen geführt sind.

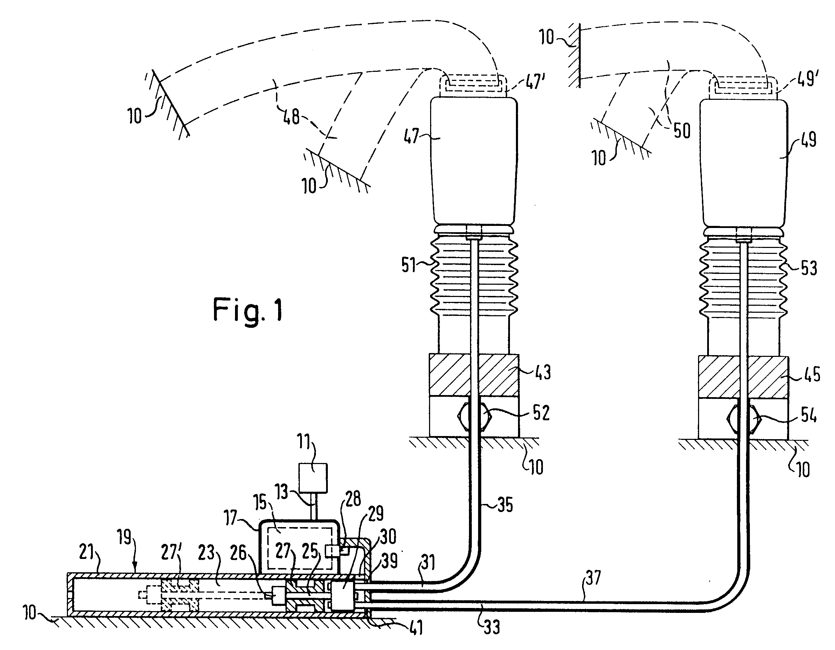

Nach Fig. 1 ist ein Beschleunigungssensor 11 über eine Steuerleitung 13 mit einem eine Energiequelle 15, insbesondere eine pyrotechnische Ladung enthaltenden Raum 17 verbunden.

Der Raum 17 ist an einer Antriebseinheit 19 angeordnet, die eine Zylinder-Kolben-Anordnung mit einem zylindrischen Gehäuse 21 und einem in einem Zylinderraum 23 verschiebbaren Kolben 27 umfaßt.

Der Kolben 27 ist dabei für ein besseres Verständnis der Funktionsweise in einer Ausgangsposition mit durchgezogenen Linien und in einer zweiten, von der Ausgangsstellung verschobenen Position 27', gestrichelt dargestellt.

Das Innere des die Energiequelle 15 enthaltenden Raumes 17 steht mit dem Zylinderraum 23 über Öffnungen 28, 30 in Verbindung.

Durch den Kolben 27 ist eine Stange oder ein Seil 25 geführt, dessen linkes Ende über ein Endstück 26 mit dem Kolben verbunden ist. Das rechte Ende des Seils 25 ist am Verteiler 29 befestigt, an dem die Enden zweier Seelen 31, 33 zweier Bowdenzüge 35, 37 fixiert sind. Die Seelen 31, 33 treten durch zwei abgedichtete Öffnungen 39, 41 aus dem zylindrischen Gehäuse 21 aus, an dem jeweils ein Ende des jeweiligen Mantels der Bowdenzüge 35 und 37 abgestützt ist.

Die beiden anderen Enden der Mäntel der Bowdenzüge 35, 37 sind an zwei Befestigungselementen 43, 45 zweier Gurtschlösser 47, 49 abgestützt, die über Schrauben 51, 53 am Chassis 10 des Fahrzeugs befestigt sind.

Die beiden freien Enden der Seelen 31, 33 sind an den Gurtschlössern 47, 49 befestigt, die über zwei Federmanschetten 51, 53 mit den Befestigungselementen 43, 45 in Verbindung stehen.

In die Gurtschlösser 47, 49 sind gestrichelt angedeutete Riegelstücke 47', 49' einschiebbar, welche über zwei Gurte 48, 50 mit geeigneten Stellen des Chassis 10 verbunden sind.

Registriert der Beschleunigungssensor 11 einen, für einen Unfall typischen Beschleunigungswert, so aktiviert er über die Steuerleitung 13 die im Raum 17 enthaltene Energiequelle 15.

Der durch die Explosion der pyrotechnischen Ladung entstehende Druck dringt durch die Öffnungen 28 und 30 in den Zylinderraum 23 ein und beaufschlagt die rechte Seitenfläche des in der Ausgangsstellung dargestellten Kolbens 27. Durch den Druck wird der Kolben 27 schlagartig nach links in Richtung der dargestellten Position 27' verschoben, wobei der an dem Seil 25 befestigte Verteiler 29 ebenfalls nach links bewegt wird.

Durch die Verschiebung des Verteilers 29 werden über die Bowdenzüge 35, 37 die Gurtschlösser 47, 49 mit den eingesteckten Riegelstücken 47', 49' zum Chassis 10 hin bewegt, wobei die Federmanschetten 51, 53 zusammengedrückt werden. Dabei werden die in den Gurtschlössern 47, 49 eingerasteten Gurte 48, 50 gestrafft, so daß sie ausreichend eng am Körper der Fahrzeuginsassen anliegen.

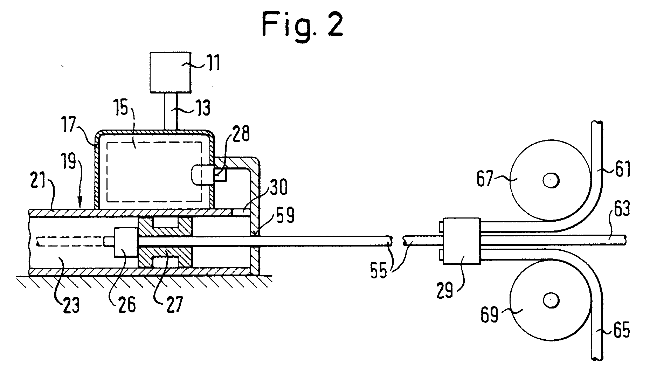

Fig. 2 zeigt eine Teilansicht einer erfindungsgemäß ausgebildeten Zugvorrichtung im Schnitt, wobei der Verteiler 29 über ein Zugorgan 55, insbesondere ein Seil und das Endstück 26 mit dem Kolben 27 verbunden ist.

Das Seil 55 tritt dabei über eine abgedichtete Öffnung 59 im zylindrischen Gehäuse 21 in den Zylinderraum 23 ein.

Am Verteiler 29 sind drei Seile 61, 63 und 65 angeschlossen, von denen die Seile 61 und 65 über zwei Rollen 67 und 69 umgelenkt werden. Die freien Enden der Seile 61, 63 und 65 sind dann beispielsweise wie in Fig. 1 dargestellt mit drei verschiedenen, nicht dargestellten Gurtschlössern verbunden.

Da die die drei in Fig. 2 nicht näher dargestellten Gurtschlösser mit der Antriebseinheit 19 verbindenden Zugorgane 61, 63, 65 über einen Teilbereich denselben Verlegungsweg (Seil 55) haben, ist es zweckmäßig, den Verteiler 29 erst am Ende dieses Verlegungsweges anzubringen, da damit sowohl den in den Verlegungskanälen üblicherweise herrschenden Platzproblemen Rechnung getragen wird als auch Materialkosten eingespart werden können.

Erst am Ende des gemeinsamen Verlegungsweges wird das Seil 55 über den Verteiler 29 in die drei Seile 61, 63 und 65 aufgespalten, die schließlich zu den Gurtschlössern führen.

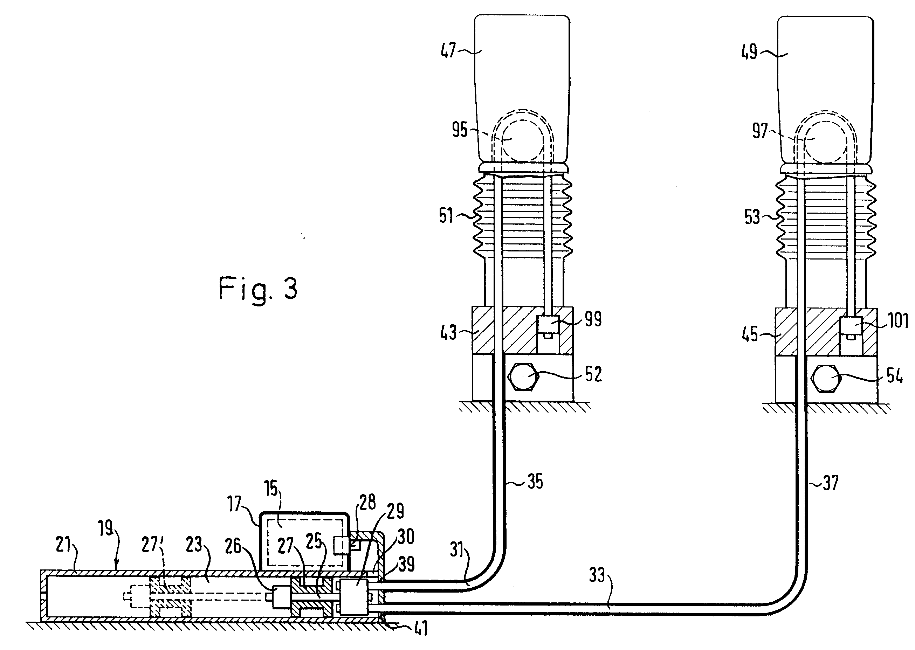

Fig. 3 zeigt eine erfindungsgemäß ausgebildete Zugvorrichtung nach Fig. 1, bei der an den Gurtschlössern 47, 49 Umlenkvorrichtungen 95, 97 in Form von Umlenkrollen vorgesehen sind. Die Seelen 31, 33 der Bowdenzüge 35, 37 sind um die Umlenkvorrichtungen 95, 97 in einem Winkel von 180° geführt und mit ihren Enden mit Fixierelementen 99, 101 an den am Chassis 10 befestigten Befestigungselementen 43, 45 fixiert.

Die Gurtschlösser 47, 49 sind auf diese Weise mit der Antriebseinheit 19 nach dem Flaschenzugprinzip verbunden. Um die nicht dargestellten Sicherheitsgurte, die mit den Gurtschlössern 47, 49 verriegelt sind, mit derselben Kraft zu straffen wie mit einer Vorrichtung nach Fig. 1, muß die Energiequelle 15 die Bowdenzüge 35, 37 nur mit der Hälfte der Kraft beaufschlagen wie sie bei einer Vorrichtung nach Fig. 1 benötigt wird.

Die Bowdenzüge 35, 37 können daher dünner und damit flexibler ausgestaltet werden als bei einer Vorrichtung nach Fig. 1. Dadurch kann das Verlegen der Bowdenzüge 35, 37, insbesondere um Kurven mit kleinem Radius deutlich erleichtert werden.

## Patentansprüche

1. Zugvorrichtung bei Kraftfahrzeugen zur Straffung von zumindest zwei jeweils ein Gurtschloß (47, 49) aufweisenden Sicherheitsgurten (48, 50) bei einem Unfall, mit zumindest einem Beschleunigungssensor (11), einer mittels des Beschleunigungssensors (11) aktivierbaren Energiequelle (15) und einer von der Energiequelle (15) gesteuerten Antriebseinheit (19), welche über Zugorgane (35, 37) an die Gurtschlösser (47, 49) angeschlossen ist, um bei einer durch den Beschleunigungssensor (11) bedingten Auslösung der Antriebseinheit (19) die Gurtschlösser (47, 49) gemeinsam schlagartig aus ihrer Ausgangslage in eine Gurtstraffposition überführen zu können, wobei die Antriebseinheit (19) einen Zylinderraum (23) und einen im Zylinderraum (23) durch die Energiequelle (15) verschiebbaren Kolben (27) umfaßt,
dadurch **gekennzeichnet,**
daß durch den Kolben (27) eine Stange oder ein Seil (25, 55) geführt ist, welche(s) an einem Verteiler (29) befestigt ist, an dem die Zugorgane (31, 33; 61, 63, 65) so fixiert sind, daß sie sich an der Stelle ihres Austritts aus dem Verteiler (29) in der gleichen Richtung wie die Stange oder das Seil (25, 55) erstrecken.

2. Zugvorrichtung nach Anspruch 1,
dadurch **gekennzeichnet,**
daß der Verteiler (29) innerhalb des Zylinderraumes (23) angeordnet ist.

3. Zugvorrichtung nach Anspruch 1,
dadurch **gekennzeichnet,**
daß der Verteiler (29) außerhalb des Zylinderraumes (23) angeordnet ist.

4. Zugvorrichtung nach einem der vorhergehenden Ansprüche,
dadurch **gekennzeichnet,**
daß die Zugorgane als Seele von Bowdenzügen (35, 37) ausgebildet sind.

5. Zugvorrichtung nach einem der Ansprüche 1 bis 3,
dadurch **gekennzeichnet,**
daß die Zugorgane als Seile (61, 63, 65) ausgebildet sind.

6. Zugvorrichtung nach einem oder mehreren der vorhergehenden Ansprüche,
dadurch **gekennzeichnet,**
daß als Energiequelle (15) eine pyrotechnische Ladung vorgesehen ist, die in Verbindung mit dem Zylinderraum (23) steht.

7. Zugvorrichtung nach einem der vorhergehenden Ansprüche,
dadurch **gekennzeichnet**,
daß an den Gurtschlössern (47, 49) zumindest eine Umlenkvorrichtung (95, 97) für das Zugorgan (35, 37) angeordnet ist, durch welche das den Gurtschlössern (47, 49) zugewandte Endstück des Zugorgans (35, 37) bevorzugt um etwa 180° umgelenkt wird, und daß das umgelenkte Endstück des Zugorgans (35, 37) mit dem Chassis (10) in Verbindung steht.

8. Zugvorrichtung nach Anspruch 7,
dadurch **gekennzeichnet,**
daß an den Gurtschlössern (47, 49) als Umlenkvorrichtung (95, 97) eine Umlenkrolle drehbar gelagert ist, an der das Zugorgan (35, 37) im wesentlichen in einem Winkel von 180° anliegt.

9. Zugvorrichtung nach Anspruch 7 oder 8,
dadurch **gekennzeichnet,**
daß das Zugorgan (35, 37) genau einmal um die Umlenkvorrichtung (95, 97) geführt ist und mit seinem freien Ende am Chassis (10) befestigt ist.

## Claims

1. Pulling apparatus in motor vehicles for the tensioning, during an accident, of at least two safety belts (48, 50) each having a belt lock (47, 49), comprising at least one acceleration sensor (11), an energy source (15) actuatable by means of the acceleration sensor (11), and a drive unit (19) controlled from the energy source (15) which is connected via pulling members (35,37) to the belt locks (47,49) in order, on triggering of the drive unit (19) brought about by the acceleration sensor (11), to move the belt locks (47, 49) jointly and abruptly from their starting position into a belt tensioning position, with the drive unit (19) including a cylinder space (23) and a piston (27) displaceable in the cylinder space (23) by the energy source (15),
characterised in that
a bar or a cable (25, 55) is guided through the piston (27) and is secured to a distributor (29) on which the pulling members (31, 33; 61, 63, 65) are so fixed that they extend, at the point of their emergence from the distributor (29), in the same direction as the bar or the cable (25, 55).

2. Pulling device in accordance with claim 1,
characterised in that
the distributor (29) is arranged inside the cylinder space (23).

3. Pulling device in accordance with claim 1,
characterised in that
the distributor (29) is arranged outside of the cylinder space (23).

4. Pulling device in accordance with one of the preceding claims,
characterised in that
the pulling members are formed as the cores of Bowden cables (35, 37).

5. Pulling device in accordance with one of the claims 1 to 3,
characterised in that
the pulling devices are formed as cables (61, 63, 65).

6. Pulling device in accordance with one or more of the preceding claims,
characterised in that
a pyrotechnical charge is provided as the energy source (15) and stands in communication with the cylinder space (23).

7. Pulling device in accordance with one of the preceding claims,
characterised in that
at least one deflection device (95, 97) for the pulling member (35, 37) is arranged at the belt locks (47, 49) by which the end piece of the pulling member (35, 37) adjacent the belt locks (47, 49) is deflected through approximately 180°, and in that the deflected end piece of the pulling member (35, 37) stands in connection with the chassis (10).

8. Pulling device in accordance with claim 7,
characterised in that
a deflection roller is rotatably journalled at the belt locks (47, 49) as the deflection device (95, 97), with the pulling member (35, 37) contacting the deflection roller essentially in an angle of 180°.

9. Pulling device in accordance with claim 7 or claim 8,
characterised in that
that pulling member (35, 37) is guided just once around the deflection device (95, 97) and is secured at its free end to the chassis (10).

## Revendications

1. Dispositif tendeur dans des véhicules automobiles, pour tendre brusquement en cas d'accident au moins deux ceintures de sécurité (48, 50), qui présentent chacune une serrure de ceinture (47, 49), comprenant au moins un détecteur d'accélération (11), une source d'énergie (15) susceptible d'être activée au moyen du détecteur d'accélération (11), et une unité d'entraînement (19) commandée par la source d'énergie (15) et raccordée aux serrures de ceinture (47, 49) via des organes de traction (35, 37), afin de pouvoir passer, lors d'un déclenchement de l'unité d'entraînement (19) provoqué par le détecteur d'accélération (11), les serrures de ceinture (47, 49) conjointement et brutalement hors de leur position de départ jusque dans une position de tensionnement des ceintures, dans lequel l'unité d'entraînement (19) comprend une chambre cylindrique (23) et un piston (27) susceptible d'être déplacé au moyen de la source d'énergie (15) dans la chambre cylindrique (23),
caractérisé en ce que
une tige ou un câble (25, 55) est guidée à travers le piston (27), ladite tige ou ledit câble étant fixé à un répartiteur (29) sur lequel les organes de traction (31, 33 ; 61, 63, 65) sont fixés de telle façon qu'ils s'étendent, à l'emplacement de leur sortie hors du répartiteur (29), dans la même direction que la tige ou le câble.

2. Dispositif de traction selon la revendication 1, caractérisé en ce que le répartiteur (29) est agencé à l'intérieur de la chambre cylindrique (23).

3. Dispositif de traction selon la revendication 1, caractérisé en ce que le répartiteur (29) est agencé à l'extérieur de la chambre cylindrique (23).

4. Dispositif de traction selon l'une des revendications précédentes, caractérisé en ce que les organes de traction sont réalisés comme étant les âmes de câbles Bowden (35, 37).

5. Dispositif de traction selon l'une des revendications 1 à 3, caractérisé en ce que les organes de traction sont réalisés sous la forme de câbles (61, 63, 65).

6. Dispositif de traction selon l'une ou plusieurs des revendications précédentes, caractérisé en ce que l'on prévoit comme source d'énergie (15) une charge pyrotechnique qui est en liaison avec la chambre cylindrique (23).

7. Dispositif de traction selon l'une des revendications précédentes, caractérisé en ce que sur les serrures de ceinture (47, 49) est agencé au moins un dispositif de renvoi (95, 97) pour l'organe de traction (35, 37), au moyen duquel la partie terminale de l'organe de traction (35, 37) tournée vers les serrures de ceinture (47, 49) est renvoyée de préférence sur approximativement 180°, et en ce que la partie terminale renvoyée de l'organe de traction (35, 37) est reliée au châssis (10).

8. Dispositif de traction selon la revendication 7, caractérisé en ce que sur les serrures de ceinture (47, 49) est monté un galet de renvoi en rotation, en tant que dispositif de renvoi (95, 97), sur lequel l'organe de traction (35, 37) est appliqué sensiblement sous un angle de 180°.

9. Dispositif de traction selon l'une ou l'autre des revendications 7 et 8, caractérisé en ce que l'organe de traction (35, 37) est guidé exactement une fois autour du dispositif de renvoi (95, 97), et en ce qu'il est fixé au châssis (10) par son extrémité libre.
